# FASCICULE DE BREVET EUROPEEN

(11) **EP 0 749 129 B1**
(45) Date de publication et mention de la délivrance du brevet: **03.05.2000**
(21) Numéro de dépôt: 96410071.3
(22) Date de dépôt: 10.06.1996
(51) Int. Cl.: H01B 7/00, H01B 7/18, H02G 1/12, H01B 7/08

(54) **Câble plat et pince a dénuder**
Flachkabel und Entmantelungszange
Flat cable and stripping pliers

(30) Priorité: 14.06.1995 FR 9507174
(43) Date de publication de la demande: 18.12.1996
(73) Titulaire: Schneider Electric Industries SA, 92500 Rueil-Malmaison (FR)
(72) Inventeur: Grumel, Christophe, 38050 Grenoble Cedex 09 (FR); Milliere, Christophe, 38050 Grenoble Cedex 09 (FR)
(74) Mandataire: Ritzenthaler, Jacques

(56) Documents cités:
- DE-A- 3 201 076
- DE-C- 941 070
- FR-A- 2 532 485

## Description

La présente invention concerne un câble plat comportant :
- une série de fils agencés pour véhiculer de la puissance électrique et/ou des informations sous la forme de signaux électriques ou optiques,
- une couche de matière synthétique isolante ou protectrice pour le logement des fils
- et au moins une protubérance longitudinale creuse s'étendant tout au long du câble sur au moins un de ses côtés latéraux, ladite protubérance comportant une cavité.

Elle concerne également une pince pour dénuder localement ledit câble plat.

Différents types de câbles plats ont été développés par les constructeurs et sont destinés à de nombreuses applications spécifiques telles que par exemple pour les câbles d'ascenseurs. Ces câbles commencent maintenant à être utilisés dans des domaines de plus en plus larges et notamment dans celui de l'installation électrique traditionnelle de bâtiments à usage professionnel ou privé.

L'avantage des câbles plats est qu'ils permettent l'utilisation des systèmes de connectique rapide à perforation ou à déplacement d'isolant en n'importe quel endroit de ces câbles. L'extension et la généralisation de la domotique ne font qu'accroître le champ d'application des câbles plats.

En revanche, les câbles plats présentent également des inconvénients, notamment celui de ne pas pouvoir être tirés dans les tubes encastrés dans les murs, généralement utilisés pour les installations électriques traditionnelles.

Pour remédier à cet inconvénient, différentes solutions sont envisageables, comme le passage en plinthe ou goulotte ou la conception d'un câble qui peut être replié sur lui-même pour se présenter sous la forme d'un câble rond pouvant être inséré dans un tube de section circulaire. La solution de la plinthe ou de la goulotte est généralement bien acceptée pour des locaux à usage professionnel, bureaux, laboratoires etc., mais est peu appréciée pour un usage domestique.

En outre, quelle que soit la solution adoptée. le câble plat présente une difficulté de passage dans les angles. La relative rigidité de la couche d'isolation génère une difficulté aussi bien dans les angles plats, où il y a un changement de l'axe du câble, que dans les angles saillants où l'axe du câble reste sensiblement dans le même plan.

Que ce soit pour passer des angles, loger les fils électriques d'un câble plat dans une gaine encastrée ou parfois pour faciliter la mise en place d'appareils tels que des interrupteurs, des prises de courant ou similaire, l'installateur est amené à dénuder ce câble sur une longueur déterminée. Cette opération s'effectue souvent de façon manuelle avec des outils rudimentaires tels qu'une lame de couteau ou un autre outil tranchant. Le résultat n'est pas toujours conforme aux normes de sécurité et de qualité, et il arrive que les conducteurs soient entaillés ou blessés.

Le document DE-C-941 070 concerne un câble plat flexible, dont l'espace interne de la gaine renferme un canal de réserve. La présence de ce canal est destinée à la mise en place de conducteurs supplémentaires, et ne permet en aucune manière le dénudage de la gaine isolante (a) entourant les conducteurs.

La présente invention se propose de pallier l'ensemble de ces inconvénients en réalisant un câble plat susceptible d'être dénudé aisément et de manière très précise, sans que les conducteurs puissent être endommagés.

Le câble plat selon l'invention est caractérisé en ce que la cavité axiale et continue est séparée du fil adjacent par un pont de liaison, lequel est déchirable après entaillage de la protubérance, suivi de l'écartement des deux flancs de ladite protubérance lors du dénudage de la couche isolante sur un tronçon de câble prédéterminé.

Selon un mode de réalisation préféré, ladite cavité est remplie d'un matériau de bourrage friable.

Ce matériau de bourrage friable est de préférence interposé entre les fils et la couche de matière isolante ou protectrice.

Des modes particuliers de réalisation de l'invention sont indiqués dans les revendications 4 - 9.

Ce but est également atteint par une pince pour dénuder localement le câble plat défini ci-dessus.

La présente invention et ses principaux avantages seront mieux compris en référence à la description de plusieurs formes de réalisation du câble plat décrites à titre d'exemples non limitatifs et aux dessins annexés dans lesquels :
- la figure 1 représente une vue en perspective d'un tronçon de câble plat selon l'invention,
- la figure 2 représente une vue en perspective d'une autre forme de réalisation d'un câble plat selon l'invention,
- la figure 3A représente une vue en coupe transversale du câble représenté par la figure 1,
- la figure 3B illustre une phase de retrait de la couche de matière isolante sur un tronçon du câble selon les figures 1 et 3A,
- la figure 3C représente une vue en perspective du câble plat selon l'invention, dont la couche isolante a été retirée sur un tronçon déterminé,
- la figure 4 représente une vue en coupe transversale d'une autre forme de réalisation du câble plat selon l'invention, qui constitue une variante de réalisation du câble selon la figure 2,
- la figure 5 représente une vue en coupe transversale illustrant une variante constructive du câble plat de la figure 4,
- les figures 6, 7 et 8A représentent des vues en coupe transversale illustrant diverses formes de réalisation d'un câble plat selon l'invention,
- la figure 8B illustre une phase de retrait de la couche de matière isolante sur un tronçon du câble tel que représenté par la figure 8A,
- les figures 9 et 10 représentent deux autres variantes du câble plat selon l'invention,
- les figures 11A et 11B représentent des vues respectivement en perspective et en élévation d'une pince pour dénuder le câble plat selon l'invention, cette pince étant en position ouverte, et
- les figures 12A et 12B représentent des vues respectivement en perspective et en élévation d'une pince pour dénuder le câble plat selon l'invention, cette pince étant en position fermée.
- les figures 13 et 14 sont des vues identiques de la figure 4 de deux autres variantes de réalisation du câble selon l'invention.

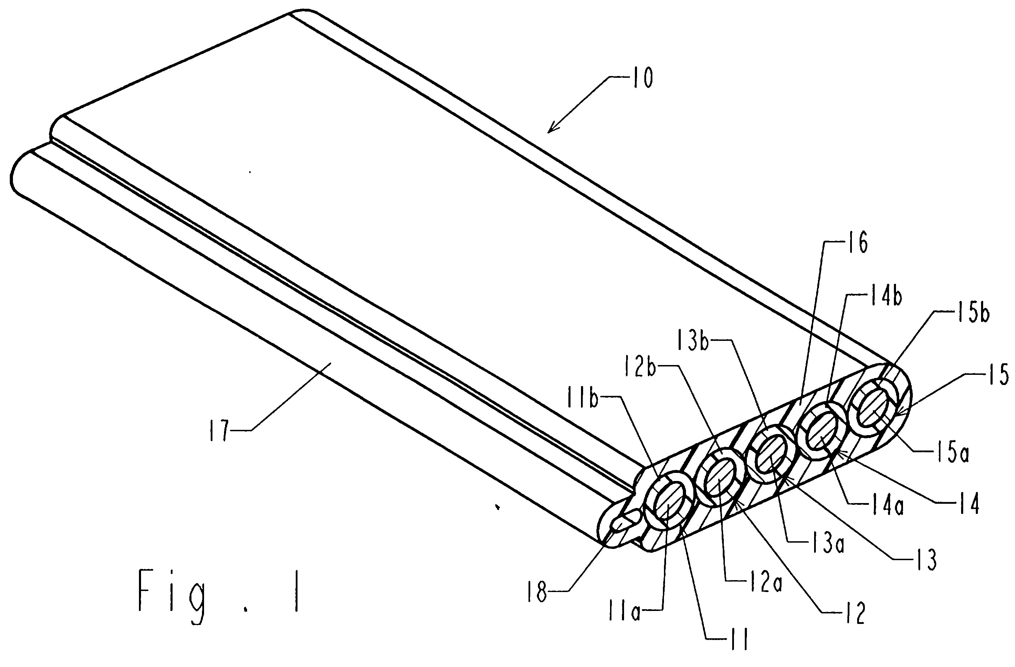

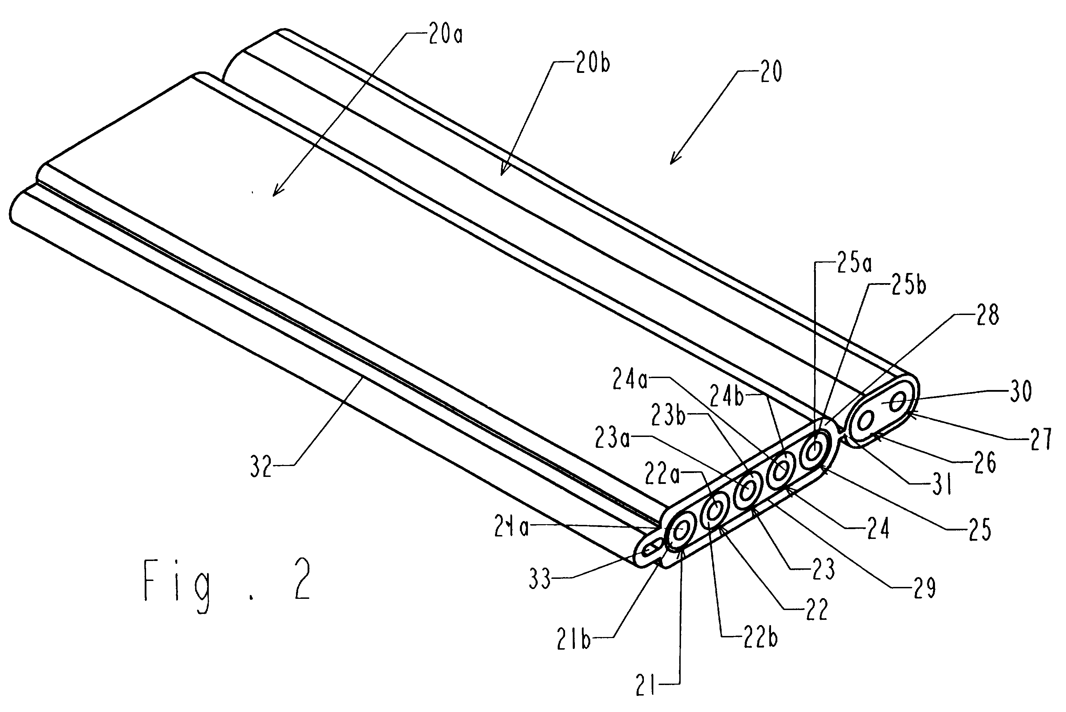

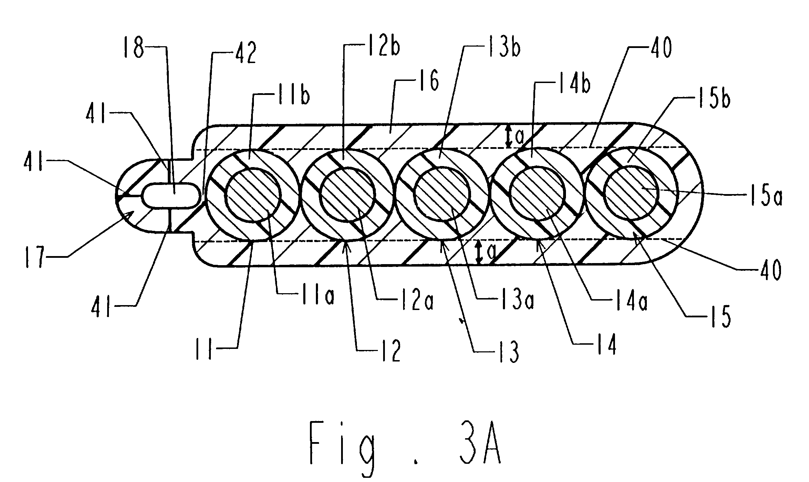

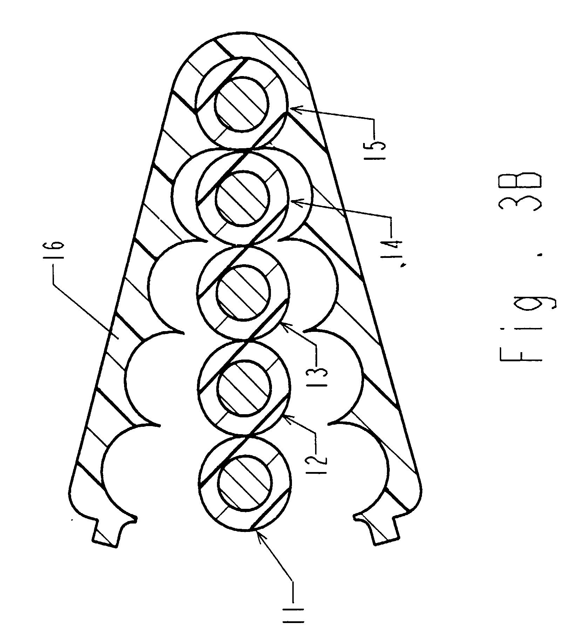

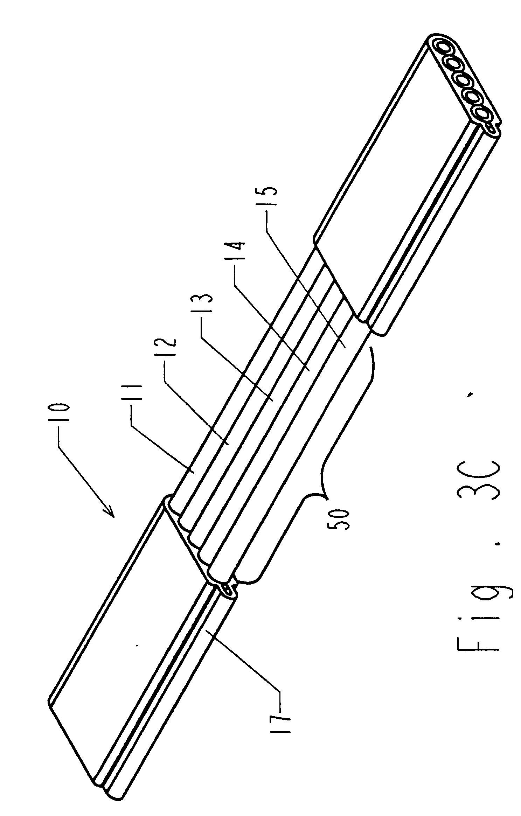

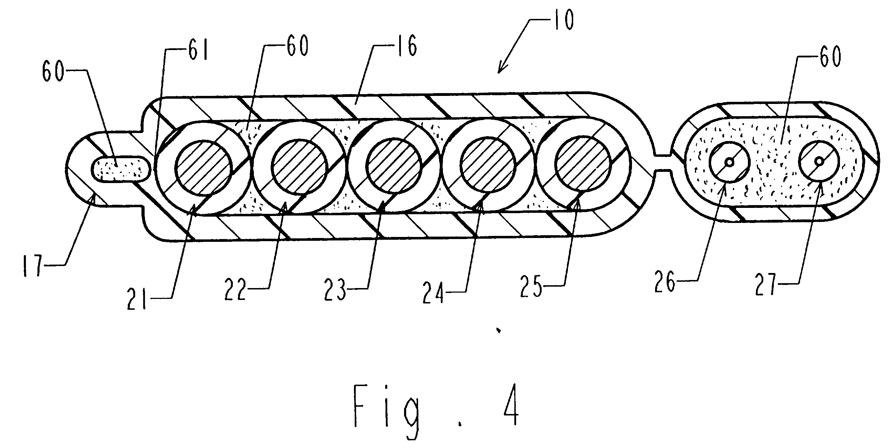

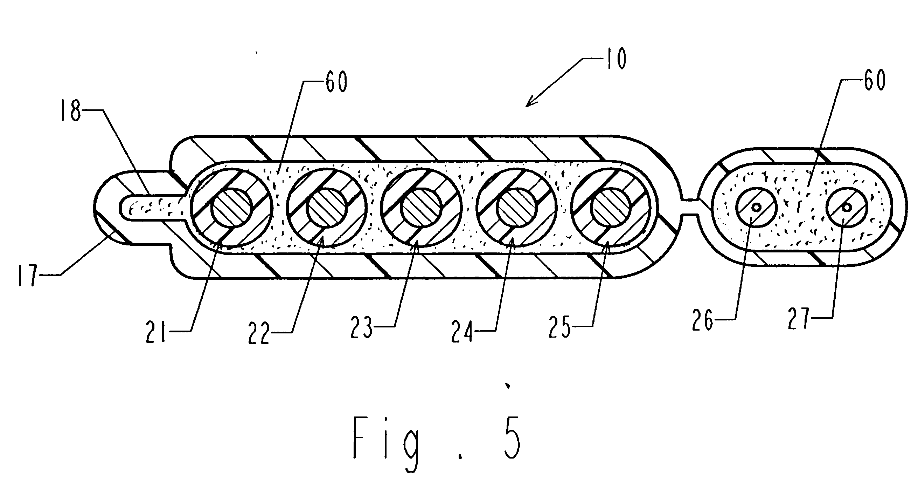

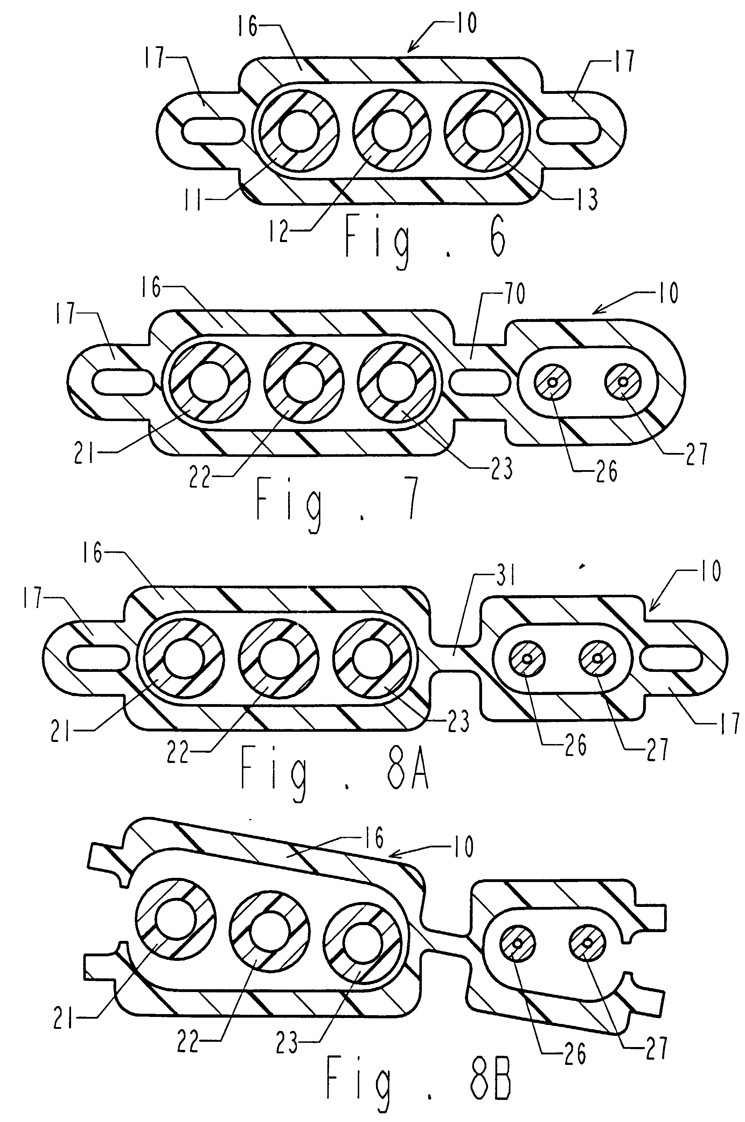

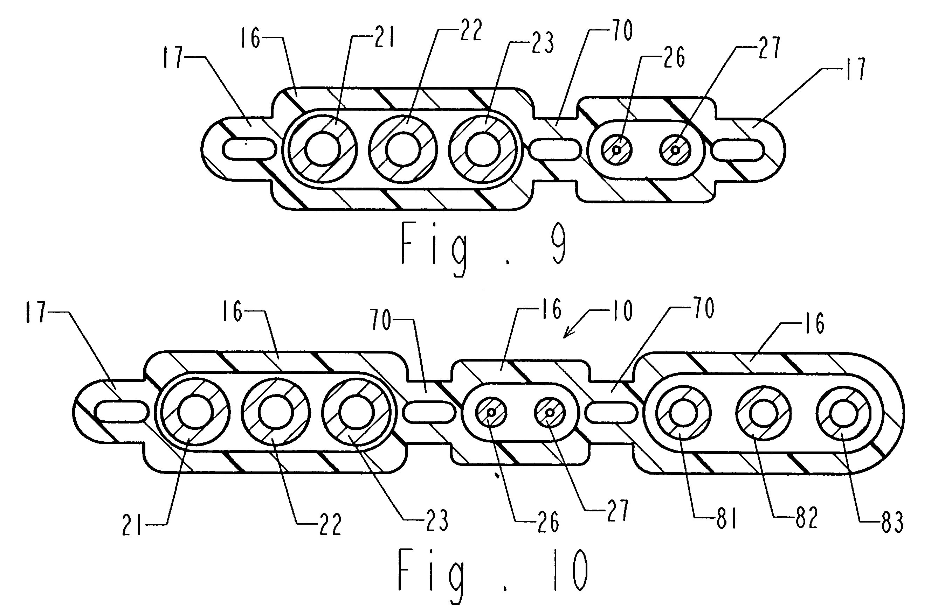

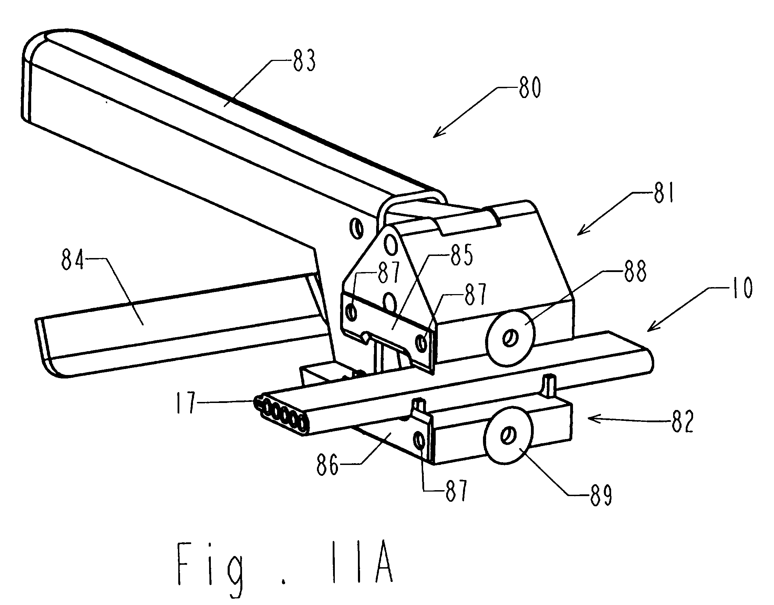

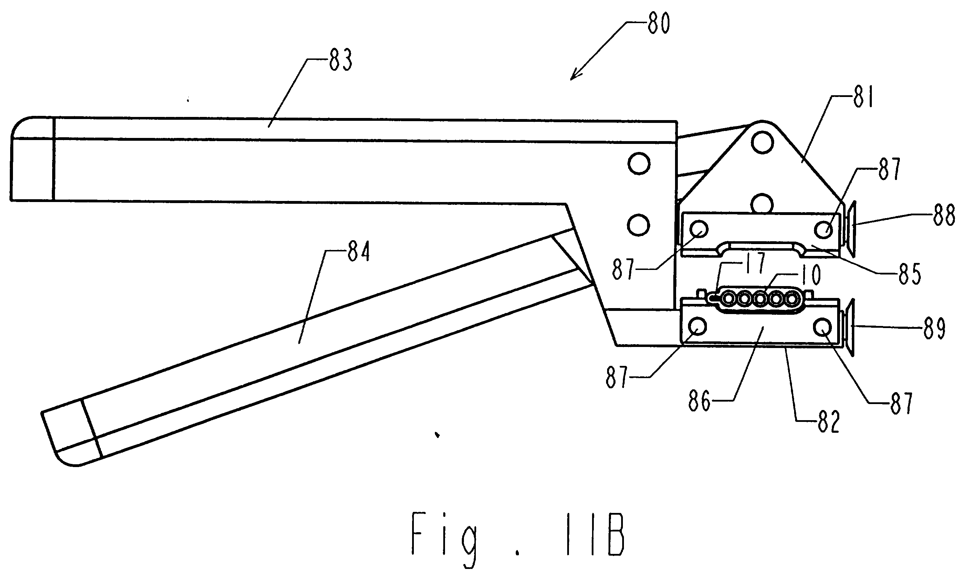

La figure 1 représente une vue en perspective d'un tronçon de câble plat selon une première forme de réalisation. Ce câble 10 comporte par exemple cinq fils électriques 11, 12, 13, 14 et 15 disposés côte à côte en nappe. Ces fils comportent chacun un conducteur central 11a, 12a, 13a, 14a et 15a, qui peut être du type monofilaire ou multibrin, entouré d'une gaine isolante respectivement 11b, 12b, 13b, 14b et 15b. Ces fils électriques isolés et juxtaposés sont enrobés dans une couche de matière synthétique 16 isolante ou protectrice qui définit le câble plat. L'originalité de ce câble par rapport aux câbles traditionnels est qu'il comporte un renflement ou une protubérance longitudinale 17 qui s'étend tout au long du câble, d'une manière continue, sur au moins un de ses côtés latéraux. Cette protubérance longitudinale 17 est creuse et comporte une cavité axiale continue 18 de sorte que la protubérance se présente comme un tube. Comme cela sera expliqué par la suite, la présence de cette protubérance creuse facilite grandement le dénudage du câble par "épluchage" de la couche isolante sur un tronçon délimité par deux entailles effectuées au moyen de la pince décrite ci-après.

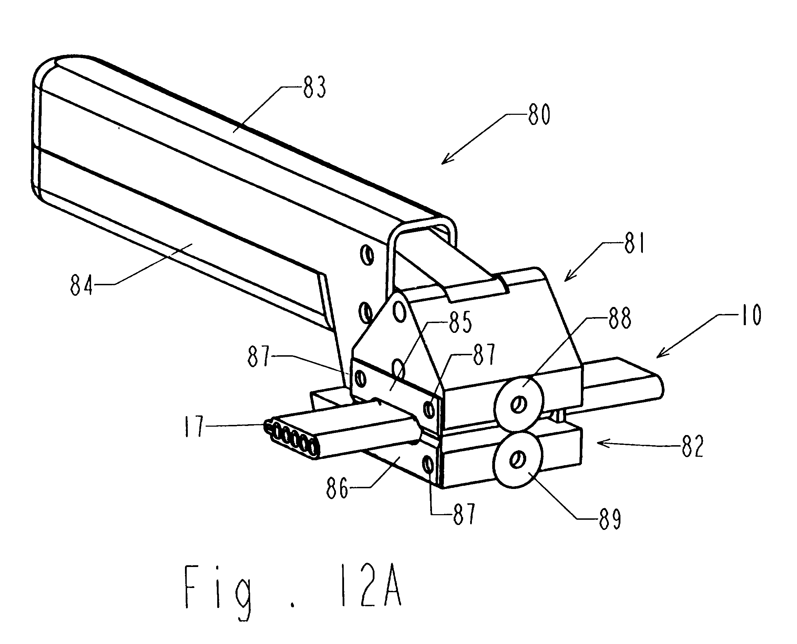

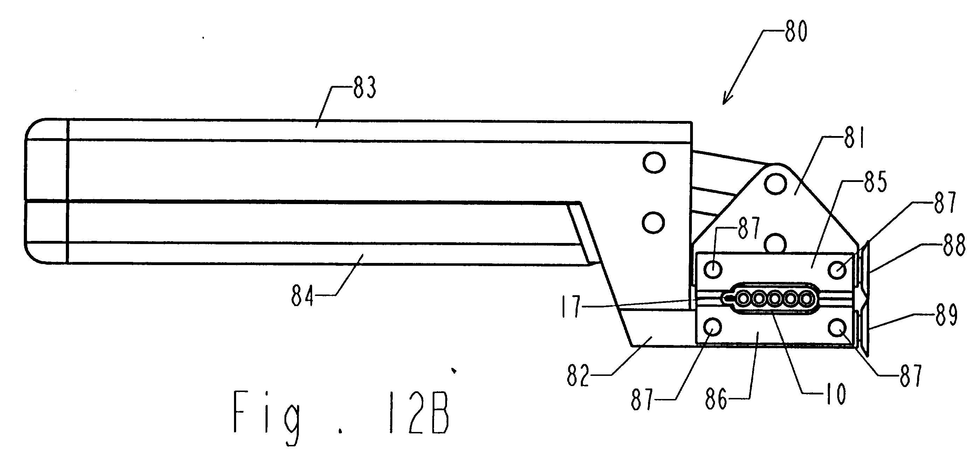

La figure 2 représente une vue en perspective d'un tronçon de câble plat correspondant à une autre forme de réalisation. Ce câble 20 comporte par exemple une première série de cinq fils électriques 21, 22, 23, 24 et 25 destinés à véhiculer de la puissance électrique pour alimenter un appareil ou un réseau, et une deuxième série de deux fils 26 et 27 destinés à véhiculer des informations par exemple sous la forme de signaux électriques ou optiques. A titre d'exemple, les fils 26 et 27 peuvent constituer une paire de fils torsadés pour une liaison téléphonique. Les deux séries de fils forment deux nappes 20a et 20b enrobées dans une couche de matière synthétique isolante 28. Dans l'exemple représenté, les fils électriques 21, 22, 23, 24 et 25 comportent chacun un conducteur central monofilaire ou multibrin 21a, 22a, 23a, 24a et 25a entouré d'une gaine isolante respectivement 21b, 22b, 23b, 24b et 25b. On notera que dans cette réalisation, les fils électriques ne sont pas juxtaposés et qu'un espace est ménagé latéralement entre eux. On notera également qu'entre la couche isolante 28 et les gaines isolantes 21a, 22b, 23b, 24b et 25b se trouve un matériau de bourrage 29 dont la fonction sera précisée par la suite.

Les fils 26 et 27 de transfert des informations peuvent être des conducteurs nus ou isolés et ils sont également entourés d'un matériau de bourrage 30 qui se situe entre la couche d'enrobage de matière synthétique 28 et lesdits fils. La couche 28 est continue et enrobe à la fois les fils électriques 21 à 25 et les fils 26 et 27 de transfert d'information. Une zone de moindre épaisseur ou pont de liaison 31 relie les deux parties du câble qui correspondent aux deux nappes 20a et 20b. Comme précédemment, le câble plat comporte une protubérance longitudinale 32 qui s'étend en continu, par exemple sur un des côtés latéraux de ce câble. Cette protubérance est creuse et comporte une cavité cylindrique continue 33 qui permet d'enlever aisément la couche isolante sur un tronçon de câble délimité par deux entailles transversales 40.

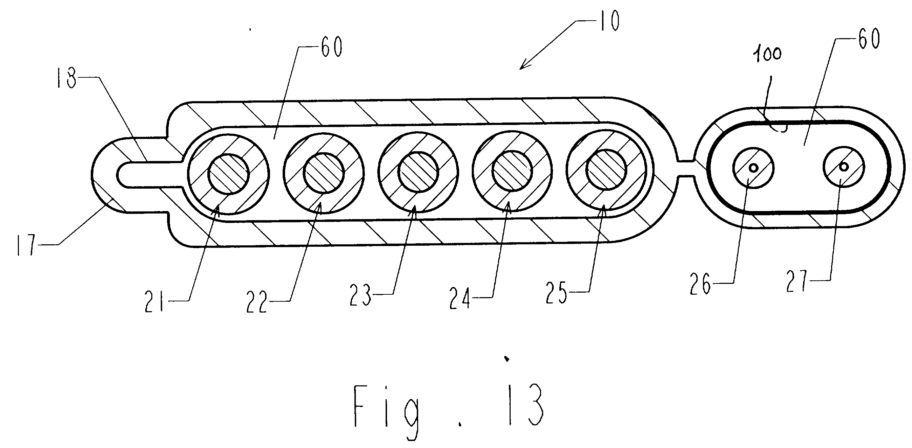

Les figures 3A et 3B illustrent plus spécifiquement le mode de dénudage local d'un câble tel que représenté par la figure 1. Cette opération s'effectue en plusieurs phases. La première consiste à délimiter la zone de dénudage par deux entailles transversales faites à chaque extrémité de cette zone au moyen d'une pince appropriée telle que représentée par les figures 11 et 12.

Ces entailles 40 sont de préférence rectilignes et ont une profondeur a qui correspond à la demi-différence d'épaisseur entre la couche isolante 16 et les gaines isolantes 11b, 12b, 13b, 14b et 15b des fils électriques 11, 12, 13, 14 et 15.

La deuxième phase consiste à entailler longitudinalement la protubérance longitudinale 17 sur le tronçon délimité par les deux entailles transversales 40. Au cours de cette phase, on crée au moins une entaille 41 dans la protubérance. Cette entaille est traversante, c'est-à-dire qu'elle débouche à l'intérieur de la cavité axiale continue 18 de la protubérance 17. Elle peut être faite dans le plan de symétrie du câble ou dans un des flancs de la protubérance. De manière préférentielle, on effectuera une double entaille symétriquement dans les deux flancs de la protubérance.

La troisième phase consiste à "éplucher" le câble sur le tronçon choisi en écartant les deux flancs de la protubérance 17 séparés par une ou plusieurs entailles 41. Cette opération consiste à déchirer la zone de liaison 42 qui sépare la cavité 18 du fil 11 et, le cas échéant, des zones de liaison de faible épaisseur séparant les fils électriques entre eux lorsqu'ils ne sont pas parfaitement juxtaposés. Dès que ces zones de liaison sont arrachées, la couche isolante peut être retirée proprement sur la zone délimitée par les entailles transversales 40 (figure 3C.).

La figure 3C représente le câble 10 préalablement dénudé sur un tronçon déterminé en vue d'y monter un appareil électrique (non représenté) qui peut être couplé aux câbles par des moyens appropriés, par exemple des connecteurs auto-dénudants. Les fils électriques 11, 12, 13, 14 et 15 sont dégagés de la couche isolante sur un tronçon déterminé 50. Le câble est destiné à être logé dans une goulotte qui le protège, l'appareil électrique étant monté à cheval sur cette goulotte.

La figure 4 représente une vue en coupe illustrant une autre forme de réalisation d'un câble plat 10 qui diffère du câble représenté par la figure 2, notamment par le fait que la cavité ménagée à l'intérieur de la protubérance longitudinale 17 est remplie d'un matériau de bourrage 60. Ce câble comporte par ailleurs, comme celui de la figure de la figure 2, une première série de cinq fils électriques 21, 22, 23, 24 et 25 disposés côte à côte en nappe et une deuxième série de deux fils 26 et 27 également disposés en nappe. Entre les gaines isolantes des fils et la couche de matière isolante 16 on a prévu un remplissage au moyen d'un matériau de bourrage identique à celui qui remplit la cavité de la protubérance. Ce matériau est de préférence de nature friable, de sorte qu'il peut être aisément enlevé dès que la couche isolante est retirée.

Dans cette réalisation, les fils électriques 21, 22, 23, 24 et 25 sont sensiblement juxtaposés et le matériau de bourrage 60 remplit des zones à section approximativement triangulaire délimitées chacune par deux faces de deux fils juxtaposés et la surface intérieure de la couche isolante 16. De la même manière, du matériau de bourrage 60 entoure les fils 26 et 27.

Pour dénuder ce câble, on procède comme précédemment en commençant par pratiquer deux entailles transversales puis en entaillant la protubérance longitudinale 17 selon une direction parallèle à l'axe. L'entaille peut être simple ou double selon l'outil utilisé. Le matériau de bourrage contenu dans la cavité de la protubérance longitudinale peut être évacué facilement vu qu'il a la particularité de s'effriter et de ne pas adhérer à la couche isolante. Dès que le pont de liaison 61 est arraché, la couche isolante s'ouvre à la manière d'une coquille de bivalve. La partie du câble contenant les fils 26 et 27, dans la forme représentée, se dénude comme le câble de la figure 1. Ce dénudage peut être facilité de différentes manières comme cela sera précisé par la suite.

La figure 5 montre un câble 10 similaire à celui de la figure 4, mais dans lequel les fils 21,22, 23, 24 et 25 sont espacés. De ce fait, ils sont entièrement noyés dans le matériau de bourrage 60. De ce fait également, le matériau de bourrage contenu à l'intérieur de la cavité 18 de la protubérance 17 est le même que celui qui enrobe les fils susmentionnés, ce qui supprime le pont de liaison 61 qui apparaît sur la figure 4. De même, les fils 26 et 27 sont entourés de matériau de bourrage 60.

La conséquence de la suppression de ce pont de liaison est que l'ouverture du type "coquille de bivalve" s'effectue immédiatement dès que la protubérance 17 est entaillée, du moins pour ce qui est de la nappe des fils 21, 22, 23, 24 et 25.

Les figures 6, 7, 8A, 8B, 9 et 10 illustrent des variantes constructives du câble 10 selon l'invention. Pour simplifier les vues, la première nappe ne comporte que trois fils, mais il est évident que les mêmes principes s'appliquent à des nappes ayant un nombre différent de fils.

En particulier, le câble 10 de la figure 6 comporte trois fils 11, 12, 13 enrobés dans un matériau de bourrage et entourés d'une gaine isolante 16. Il comporte deux protubérances longitudinales 17 disposées de part et d'autre de la nappe sur ses deux côtés latéraux. Le retrait de l'isolant se trouve simplifié lorsque les deux protubérances sont entaillées longitudinalement. Les deux protubérances 17 peuvent être creuses ou remplies de matériau de bourrage.

La figure 7 illustre une variante d'un câble plat 10 à deux nappes de fils, respectivement 21, 22, 23 et 26, 27 similaire à celui des figures 2, 4 et 5. Toutefois, dans cette réalisation le pont de liaison 31 (voir figure 2) a été remplacé par une protubérance 70 similaire à la protubérance 17 disposée le long d'un côté latéral du câble. Les protubérances 17 et 70 peuvent être creuses ou remplies d'un matériau de bourrage friable.

Le retrait de la couche isolante 16 débute par une phase au cours de laquelle on entaille longitudinalement les protubérances 17 et 70. Dans le cas où le matériau de bourrage contenu dans ces protubérances est intégral avec le matériau de bourrage qui enrobe les fils, l'ouverture se fait quasi instantanément. Dans le cas où il subsiste un pont de liaison en matière isolante, ce dernier devra être préalablement arraché avant le retrait total de la couche isolante 16.

La figure 8A représente une autre variante de réalisation d'un câble 10 selon l'invention. Ce câble est similaire à celui des figures 2, 4 et 5, mais il comporte deux protubérances 17 associées respectivement à chacune des deux nappes de fils. Pour retirer la couche isolante 16 sur un tronçon déterminé, on entaille selon au moins une direction axiale chacune des deux protubérances 17. On ouvre ensuite, comme le montre la figure 8B, les deux parties du câble, ce qui permet de dégager complètement la couche isolante 16, sans même rompre le pont de liaison 31 qui relie ces deux parties.

La figure 9 représente une autre forme de réalisation d'un câble 10, qui présente des similitudes avec celui des figures 8A et 8B. En effet, il comporte deux nappes de fils, respectivement 21, 22, 23 et 26, 27 qui, dans ce cas ne sont plus reliées par un pont de liaison 31, mais par une protubérance 70 qui peut être creuse ou remplie de matériau de bourrage. De ce fait, le retrait de la couche isolante passe par une première phase consistant à entailler axialement les deux protubérances 17 et la protubérance 70 servant de liaison entre les deux nappes.

La figure 10 représente une dernière variante dans laquelle le fil 10 comporte trois nappes de fils qui peuvent être destinées à la transmission de puissance électrique et/ou à celle de signaux électriques ou optiques. La première nappe comporte les fils 21, 22, et 23, la deuxième les fils 26 et 27 et la troisième des fils ou fibres optiques 81, 82 et 83.

Comme précédemment, ces nappes comportent chacune une couche isolante 16 et le câble comporte au moins une protubérance longitudinale 17. Les nappes sont dans ce cas reliées entre elles par des protubérances 70 creuses ou remplies de matériau de bourrage qui servent de ponts de liaison entre les nappes.

Comme précédemment, pour retirer un tronçon de la couche isolante 16 on pratique deux entailles transversales à distance déterminée et au moins une entaille axiale de la protubérance 17. Pour faciliter le retrait, on peut encore entailler les protubérances 70. Dans le cas où les cavités des protubérances sont remplies de matériau de bourrage et qu'elles communiquent avec les espaces remplis de ce même matériau et entourant les fils, "l'épluchage" du câble est grandement facilité et une seule entaille axiale de la protubérance 17 est suffisante.

En référence aux figures 11A, 11B et 12A, 12B, le câble plat 10 peut être dénudé ou épluché, c'est-à-dire débarrassé de la couche isolante sur un tronçon donné, au moyen d'une pince à dénuder 80 qui comporte essentiellement deux mâchoires 81 et 82 actionnées par deux poignées 83 et 84. Un mécanisme d'actionnement du type à parallélogramme assure un déplacement relatif des mâchoires tel qu'elles restent parallèles à elles-mêmes. Chaque mâchoire porte un couteau 85, respectivement 86, ces couteaux étant conçus pour coopérer dans le but d'entailler transversalement le câble 10. Comme mentionné précédemment, on pratique deux entailles éloignées l'une de l'autre d'une distance qui correspond à la longueur du tronçon de câble que l'on se propose de dénuder. Les couteaux 85 et 86 ont une forme appropriée à la forme du câble. Ils sont fixés aux mâchoires par des vis 87, ce qui permet à la fois de les remplacer en cas d'usure et de les changer pour les adapter à d'autres formes de câbles, telles que celles illustrées par les figures précédentes.

En outre, chaque mâchoire porte une roulette 88, respectivement 89, à bord tranchant, ces deux roulettes coopèrant pour entailler axialement la protubérance 17 du câble 10 sur le tronçon délimité par les deux entailles transversales réalisées à l'aide des couteaux 85 et 86.

Les figures 11A et 11B montrent la pince à l'état ouvert, le câble 10 étant en place entre les deux mâchoires. Les figures 12A et 12B montrent la pince à l'état fermé, les couteaux 85 et 86 effectuant une entaille transversale dans la couche isolante du câble 10. On notera que dans cette position les roulettes 88 et 89 se touchent. Pour entailler la protubérance longitudinale du câble 10, l'opérateur n'introduit pas le câble entre les mâchoires de la pince, du moins pour cette forme de réalisation de la pince qui combine les deux fonctions.

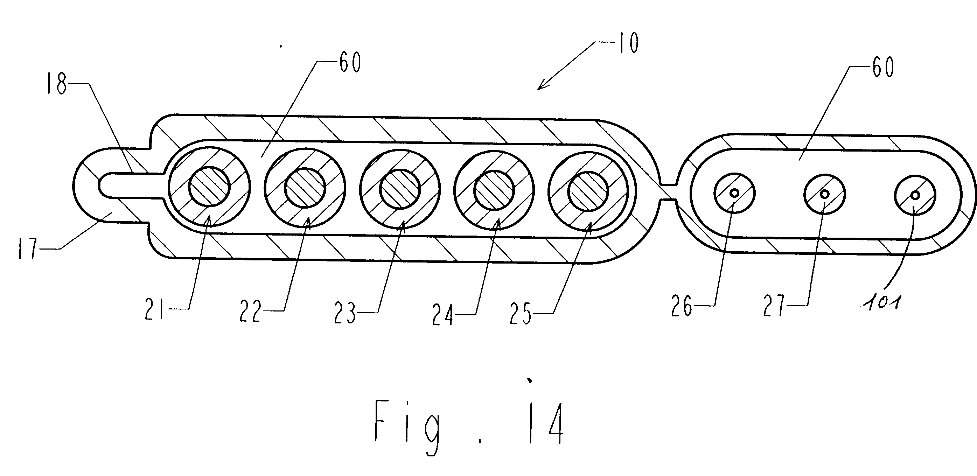

Les figures 13 et 14 montrent le câble plat de la figure 2, lequel peut être équipé de moyens de blindage entre les deux nappes des conducteurs de puissance 21, 22, 23, 24, 25 et des conducteurs fils fins 26,27, 101. Selon la figure 13, les moyens de blindage comportent un écran 100 en un matériau conducteur, notamment métallique, entourant l'ensemble des conducteurs fils fins 26, 27 à l'intérieur de la gaine isolante.

Selon la figure 14, l'écran 100 peut être supprimé en portant les trois conducteurs 26, 27, 101 du bus à des potentiels alternés (- + -) ou (+ - +), de manière à compenser automatiquement l'action des champs électromagnétiques perturbateurs.

## Revendications

1. Câble plat comportant :
- une série de fils agencés pour véhiculer de la puissance électrique et/ou des informations sous la forme de signaux électriques ou optiques,
- - une couche de matière synthétique (16) isolante ou protectrice pour le logement des fils
- et au moins une protubérance longitudinale (17) creuse s'étendant tout au long du câble sur au moins un de ses côtés latéraux, ladite protubérance comportant une cavité (18),
caractérisé en ce que la cavité (18) axiale et continue est séparée du fil (11, 21) adjacent par un pont de liaison (42, 61), lequel est déchirable après entaillage de la protubérance, suivi de l'écartement des deux flancs de ladite protubérance lors du dénudage de la couche (16) isolante sur un tronçon de câble prédéterminé.

2. Câble plat selon la revendication 1, caractérisé en ce que ladite cavité est remplie d'un matériau de bourrage (60) friable.

3. Câble plat selon la revendication 1, caractérisé en ce qu'il comporte un matériau de bourrage (29, 60) friable interposé entre les fils (21, 22, 23, 24, 25, 26, 27) et la couche de matière synthétique (16) isolante ou protectrice.

4. Câble plat selon la revendication 1, comportant au moins deux nappes de fils enrobées dans une couche de matière synthétique (16) isolante ou protectrice, caractérisé en ce que chacune de ces nappes est associée à au moins une protubérance longitudinale (17) s'étendant sur au moins un des côtés latéraux de chacune des nappes.

5. Câble plat selon la revendication 4, caractérisé en ce que l'une desdites protubérances est disposée entre deux nappes de fils et sert de pont de liaison (70) entre elles.

6. Câble plat selon la revendication 5, caractérisé en ce que ladite protubérance comporte une cavité remplie de matériau de bourrage.

7. Pince pour dénuder localement le câble plat (10) selon l'une quelconque des revendications précédentes, caractérisée en ce qu'elle comporte deux mâchoires (81, 82) pourvues chacune d'un couteau (85, 86), chaque mâchoire (81, 82) étant équipée d'une roulette (88, 89) à bord tranchant agencée pour entailler ladite protubérance (17) du câble plat (10) selon une direction axiale, sur deux faces opposées de cette protubérance.

8. Pince selon la revendication 7, caractérisée en ce que les mâchoires (81, 82) et couteaux (85, 86) sont destinés à se déplacer parallèlement à eux-mêmes et entailler la couche de matière synthétique (16) isolante ou protectrice selon une direction transversale par rapport au câble.

9. Câble plat selon la revendication 1, caractérisé en ce que des moyens de blindage électromagnétique sont prévus entre les deux nappes des conducteurs de puissance (21, 22, 23, 24, 25) et des conducteurs (26, 27, 101) d'un bus.

## Patentansprüche

1. Flachkabel mit
- mehreren Einzeladern zur Übertragung elektrischer Energie und/oder von Daten in Form elektrischer oder optischer Signale,
- einem Isolier- bzw. Schutzmantel aus Kunststoff (16) zur Aufnahme der Einzeladern sowie
- mindestens einem hohlen Längsüberstand (17), der sich auf mindestens einer Seite des Kabels über dessen gesamte Länge erstreckt und einen Hohlraum (18) aufweist,
dadurch gekennzeichnet, daß der durchgängige axiale Hohlraum (18) von der angrenzenden Einzelader (11, 21) durch einen Verbindungssteg (42, 61) getrennt ist, der nach dem Einschneiden des Überstandes aufgebrochen werden kann, um anschließend zur Entfernung des Isoliermantels (16) in einem bestimmten Kabelabschnitt die beiden Hälften des genannten Überstandes auseinanderzuziehen.

2. Flachkabel nach Anspruch 1, dadurch gekennzeichnet, daß der genannte Hohlraum (18) mit einem bröckligen Füllstoff (60) ausgefüllt ist.

3. Flachkabel nach Anspruch 1, dadurch gekennzeichnet, daß es einen zwischen die Einzeladern (21, 22, 23, 24, 25, 26, 27) und den Isolier- oder Schutzmantel aus Kunststoff (16) eingebrachten Füllstoff (29, 60) enthält.

4. Flachkabel nach Anspruch 1 mit mindestens zwei von einem Isolier- oder Schutzmantel aus Kunststoff (16) umgebenen Flachsträngen aus Einzeladern, dadurch gekennzeichnet, daß jeder dieser Flachstränge mindestens einem Längsüberstand (17) zugeordnet ist, der auf mindestens einer Seite jedes dieser Flachstränge ausgebildet ist.

5. Flachkabel nach Anspruch 5, dadurch gekennzeichnet, daß einer der genannten Überstände zwischen zwei Adersträngen ausgebildet ist und als Verbindungssteg (70) zwischen diesen Strängen dient.

6. Flachkabel nach Anspruch 6, dadurch gekennzeichnet, daß der genannte Überstand einen mit einem Füllstoff ausgefüllten Hohlraum umfaßt.

7. Zange zum örtlich begrenzten Abisolieren des nach irgendeinem der vorherigen Ansprüche ausgeführten Flachkabels (10), dadurch gekennzeichnet, daß sie zwei Backen (81, 82) mit jeweils einem daran befestigten Messer (85, 86) umfaßt, wobei jede Backe (81, 82) eine Rolle (88, 89) mit Schneidrand trägt, die dazu dient, den genannten Überstand (17) des Flachkabels (10) auf zwei einander gegenüberliegenden Seiten dieses Überstands in Axialrichtung einzuschneiden.

8. Zange nach Anspruch 7, dadurch gekennzeichnet, daß die Backen (81, 82) und Messer (85, 86) dazu dienen, parallel zueinander verschoben zu werden bzw. den Isolier- oder Schutzmantel aus Kunststoff (16) in einer quer zum Kabel verlaufenden Richtung einzuschneiden.

9. Flachkabel nach Anspruch 1, dadurch gekennzeichnet, daß elektromagnetische Entstörmittel zwischen den beiden Flachsträngen der Energieleiter (21, 22, 23, 24, 25) und der Leiter (26, 27, 101) einer Busleitung angeordnet sind.

## Claims

1. A flat cable comprising:
- a series of wires arranged to convey electrical power and/or information in the form of electrical or optic signals,
- a layer of synthetic insulating or protective material (16) for housing the wires,
- and at least one hollow longitudinal protuberance (17) extending along the whole of the cable on at least one of its lateral sides, said protuberance comprising a cavity (18),
characterized in that the continuous axial cavity (18) is separated from the adjacent wire (11, 21) by a joining bridge (42, 61), which can be torn off after the protuberance has been slit followed by separation of the two flanks of said protuberance when the insulating layer (16) is bared over a predetermined section of cable.

2. The flat cable according to claim 1, characterized in that said cavity is filled with a friable stuffing material (60).

3. The flat cable according to claim 1, characterized in that it comprises a friable stuffing material (29, 60) inserted between the wires (21, 22, 23, 24, 25, 26, 27) and the layer of synthetic insulating or protective material (16).

4. The flat cable according to claim 1, comprising at least two ribbon braids of wires coated with a layer of synthetic insulating or protective material (16), characterized in that each of these ribbon braids is associated to at least one longitudinal protuberance (17) extending over at least one of the lateral sides of each of the ribbon braids.

5. The flat cable according to claim 4, characterized in that one of said protuberances is arranged between two braids of wires and acts as a joining bridge (70) between them.

6. The flat cable according to claim 5, characterized in that said protuberance comprises a cavity filled with stuffing material.

7. Pincers for locally baring the flat cable (10) according to any one of the foregoing claims, characterized in that it comprises two jaws (81, 82) each provided with a blade (85, 86), each jaw (81, 82) being equipped with a roller (88, 89) with a sharp edge arranged to slit said protuberance (17) of the flat cable (10) in an axial direction, on two opposite faces of this protuberance.

8. The pincers according to claim 7, characterized in that the jaws (81, 82) and blades (85, 86) are designed to move parallel to one another and to slit the layer of synthetic insulating or protective material (16) in a transverse direction with respect to the cable.

9. The flat cable according to claim 1, characterized in that electromagnetic shielding means are provided between the two ribbon braids of the power conductors (21, 22, 23, 24, 25) and of the conductors (26, 27, 101) of a bus.
